## Europäisches Patentamt

## European Patent Office

## Office européen des brevets

(19)

(11) Veröffentlichungsnummer: **0 165 451 B1**

(12) **EUROPÄISCHE PATENTSCHRIFT**

(45) Veröffentlichungstag der Patentschrift:
08.11.89

(51) Int. Cl.⁴: **A 23 L 1/20**, B 02 C 4/02, A 23 C 11/10

(21) Anmeldenummer: 85105801.6

(22) Anmeldetag: 11.05.85

(54) **Verfahren zum Herstellen eines Sojaproduktes.**

(30) Priorität: 22.05.84 CH 2513/84

(43) Veröffentlichungstag der Anmeldung:
27.12.85 Patentblatt 85/52

(45) Bekanntmachung des Hinweises auf die Patenterteilung·
08.11.89 Patentblatt 89/45

(84) Benannte Vertragsstaaten:
BE CH DE FR GB IT LI NL SE

(56) Entgegenhaltungen:
BE-A- 405 326
FR-A- 2 195 407
FR-A- 2 224 209
FR-A- 2 386 350
GB-A- 1 400 470

PATENTS ABSTRACTS OF JAPAN, Band 7, Nr. 161
(C-176)[1306], 15. Juli 1983; & JP-A-58 71 859
PATENTS ABSTRACTS OF JAPAN, Band 5, Nr. 204
(C-85)[876], 24. Dezember 1981; JP-A-56 124 360
Belitz/Grosch, Lehrbuch der Lebensmittelchemie 1982,
p. 730
(73) Patentinhaber: Gebrüder Bühler AG, CH-9240 Uzwil (CH)

(72) Erfinder: **Gavin, Michel, Dr., Hofbergstrasse 39, CH-9500 Wil (CH)**
Erfinder: **Grunder, Urs, Bichwilerstrasse 23, CH-9242 Oberuzwil (CH)**
Erfinder: **Ulmer, Karl, Waldeggstrasse 4, CH-9500 Wil (CH)**

## Beschreibung

Die Erfindung bezieht sich auf ein Verfahren nach dem Oberbegriff des Anspruches 1. Wenn dabei bzw. in der Beschreibung von «Bohnen» die Rede ist, so ist dies keinesfalls auf ganze Bohnen beschränkt, vielmehr kann das Ausgangsmaterial auch aus Bohnenhälften oder Bohnenbruch bestehen.

Ölsaaten und besonders Sojabohnen werden häufig in der Lebensmittelindustrie eingesetzt und dabei trocken mit Hilfe von Schlag-, z. B. Stiftmühlen (GB-A-1 400 470, FR-A-2 195 407 oder JP-A-56-124 360) vermahlen oder auch extrudiert. Die so erhältlichen Korngrößen sind verhältnismäßig grob, und ein zur Herstellung von Sojamilch und Sojamilchprodukten benötigtes feines Pulver kann auf diese Weise nicht erzielt werden, zumal die einzelnen Zellen nur zum Teil aufgeschlossen werden. In der Praxis ist daher im Anschluß daran eine Sichtung erforderlich, wie sie die obigen Literaturstellen auch beschreiben, wobei ein Anteil von rund 50% als zu grob ausgeschieden werden muß.

Um Sojamilch zu erhalten, werden im allgemeinen Kolloidmühlen eingesetzt (z. B. US-PS-3 399 997, Spalte 2, Zeilen 59ff), wobei die Vermahlung der Sojabohnen im nassen Zustand erfolgt. Aus der so erhaltenen Aufschlämmung wird entweder Sojamilch für den menschlichen Genuß hergestellt, oder über diese ein koaguliertes Produkt, das als Tofu-Käse vertrieben wird. Bei einem solchen Naßverfahren geht das in den Sojabohnen enthaltene Protein in Lösung, wogegen die Zellverbände abgefiltert bzw. abgepreßt werden müssen. Dabei kommt es zu einem relativ großen Verlust an Protein, der wiederum bis zu 50% betragen kann. Ein weiterer Nachteil der bekannten Naßvermahlung liegt darin, daß die Kombination von Stärke und Eiweiss zu einer hohen Viskosität führt, was einerseits einen hohen Leistungsbedarf der Kolloidmühlen bedingt, anderseits aber auch die Notwendigkeit zu trocknen, falls man nämlich nur ein Pulver und nicht eine Milch zu erhalten wünscht.

Zwar sind auch bereits andere Versuche unternommen worden, um auf chemischen Weg das in den Sojabohnen enthaltene Protein zu extrahieren. Auch dabei wurde gelegentlich eine trockene Zerkleinerung eingesetzt, um das Extraktionsmittel besser einwirken zu lassen (US-PSen 3 645 745; 3 288 614 und 2 802 738). Eben weil nach den bekannten Vorschlägen eine mechanische Extraktion des Proteins nicht erhalten werden konnte, bedurfte es der anschließenden chemischen Behandlung. Derartige Behandlungsverfahren sind übrigens auch zur Entbitterung von Sojabohnen vorgeschlagen worden, doch stehen solche chemischen Verfahren nicht überall im Einklang mit den Lebensmittelvorschriften.

Nun ist aus der JP-A-58-71 859 ein anderes Trockenmahlverfahren für Sojabohnen bekannt, bei dem diese zwischen zwei einander entgegengesetzt rotierenden Scheiben zermahlen werden. Diese Scheiben besitzen einen vorbestimmten Abstand von 1 mm oder weniger voneinander, der praktisch die Korngröße bestimmt. Dies bedeutet, daß die beiden Scheiben nur so lange und in einem solchen Ausmasse, vor allem durch Reibung, auf das Material einwirken können, bis die Partikelgröße geringer als der Scheibenabstand ist, der allerdings nicht beliebig klein gewählt werden kann, da für die Reibung eine gewisse Oberflächenrauhigkeit vonnöten ist. Jedenfalls kann damit nicht der überwiegende Teil des Materials bis zum Zellaufschluß vermahlen werden (was selbstverständlich auch für Walzen mit Fixabstand voneinander gilt). Ähnlich arbeiten auch die Verfahren nach den FR-A-2 224 209 und 2 386 350, wo ebenfalls vorgegebene Mahlspalte vorgesehen sind.

Der Erfindung liegt nun die Aufgabe zugrunde, ein einfaches Verfahren aufzuzeigen, mit dem es gelingt, Ölsaatenpulver, insbesondere Sojapulver, und in der Folge weitere Sojaprodukte, mit geringem Energieaufwand und guter Ausbeute zu erhalten. Erfindungsgemäß wird diese Aufgabe in überraschend einfacher Weise durch die kennzeichnenden Merkmale des Anspruches 1 gelöst. Es sind also im wesentlichen vier Faktoren, die zur Lösung der gestellten Aufgabe erforderlich sind, nämlich eine Trockenvermahlung, nicht nur unter Druck, sondern auch unter Anwendung von Reibung und bis zur Aufschließung der Cotyledonenzellen, d. h. der Zerstörung von deren Zellwänden. Der Grund dafür ist darin zu sehen, daß die Proteinkörper, besonders der Sojabohne, bereits in verhältnismäßig geringer Größe innerhalb der Zellstruktur vorliegen und diese Zellstruktur durch trockene Anwendung von Druck und Reibung so weit aufgelöst und zerstört wird, daß das Proteinpulver praktisch von selbst erhalten wird. Durch die weitgehende Zerstörung der Zellstruktur entfällt aber auch die Notwendigkeit des Abfilterns bzw. Abpressens der Zellwände und damit ein wesentlicher Grund, warum die Proteinausbeute bisher so gering war. Darüberhinaus ergibt sich ein weiterer günstiger Effekt: durch das Aufbrechen der Zellwände tritt das darin enthaltene Fett aus und wird durch die Reibung verflüssigt, so daß die Vermahlung auch mit geringem Energieaufwand vor sich gehen kann.

Obwohl die trockene Vermahlung auch in einer Rührwerksmühle erfolgen könnte, wird bevorzugt das Vermahlen auf einem Reibwalzwerk mit mindestens zwei, vorzugsweise mindestens drei, Walzen unterschiedlicher Geschwindigkeit vorgenommen, wobei auf diese Weise herkömmliche, im allgemeinen für Schokoladen oder Farben verwendete Reibwalzwerke, beispielsweise Dreiwalzwerke oder Fünfwalzwerke, oder auch Zweiwalzwerke, insbesondere wenigstens zwei hintereinander, verwendet werden können. Solche Reibwalzwerke können zwischen einander benachbarten Walzen eine Differenz der Umfangsgeschwindigkeiten von etwa 1 : 1,5 bis 1 : 5 haben, um eine ausreichende Reibung auszuüben.

Ein besonders feines Pulver hoher Qualität und guter Verdaulichkeit wird erhalten, wenn die Früchte, insbesondere Sojabohnen in wenigstens zwei Stufen vermahlen werden, wobei sie erst einer Quetschung, insbesondere auf einem Flokkierwalzwerk, unterzogen werden, worauf die eigentliche Vermahlung des so erhaltenen flokkenartigen Produktes unter Anwendung von Druck und Reibung vorgenommen wird. Durch die Quetschung erhält man ein flockenartiges Produkt, das teilweise auch Agglomerate von Fruchtteilchen aufweist, die in der nachfolgenden zweiten Vermahlungsstufe unter Druck und Reibung aufgelöst werden.

Soferne nicht bereits vorher ein Entbitterungsvorgang durchgeführt wurde oder ein solcher Vorgang unterbleiben soll, kann gleichzeitig mit der Druckaufbringung das Produkt erhitzt werden, wodurch sich zwei verschiedene Effekte ergeben, nämlich einerseits eine Entbitterung, anderseits bei entsprechender Temperatur auch eine Teilgelatinisierung der enthaltenen Stärke, wodurch die Qualität des erhaltenen Produktes verbessert wird. Die Verwirklichung dieses Verfahrensschrittes kann dabei am besten so erfolgen, daß die Vermahlung mit Hilfe von Walzen vorgenommen wird, von denen wenigstens ein Teil, insbesondere die Walzen des Flockierwalzwerkes, beheizt sind. Selbstverständlich ist es ebenso möglich, zusätzlich oder alternativ die Walzen des Reibwalzwerkes zu beheizen, nachdem derartige Walzwerke üblicherweise mit Durchflußkanälen für einen Wärmeträger ausgestattet sind. Gute Ergebnisse erhält man, wenn die Walzen auf eine Temperatur von über 100 °C, vorzugsweise auf eine Temperatur zwischen 100° und 200 °C und insbesondere auf etwa 150 °C, aufgeheizt werden, wobei der letztere Wert mit einer Toleranzgrenze von ± 10 verstanden werden soll.

Eine weitere vorteilhafte Maßnahme liegt darin, daß vor dem Erhitzen das Früchteprodukt, wie Soja, befeuchtet wird, und daß es vorzugsweise auf eine Feuchtigkeit zwischen 20 Gew.% und 50 Gew.%, insbesondere auf etwa 25 Gew.%, gebracht wird. Auch diese Maßnahme hat einen doppelten Effekt. Einerseits wird dadurch nämlich ein Rösten der Früchte vermieden, anderseits begünstigen die bei der nachfolgenden Wärmebehandlung entstehenden Wasserdämpfe die Entfernung von allfälligen Bitterstoffen, die von den Dämpfen mitgerissen und gegebenenfalls abgesaugt werden.

Aus der CH-PS-575 723 ist es bekannt, die Sojabohnen im Anschluß an eine Wärmebehandlung zu prallen. Es hat sich nun im Zusammenhang mit dem vorliegenden Verfahren als günstig erwiesen, im wesentlichen dieses bekannte Verfahren anzuwenden, indem die Früchte, insbesondere Sojabohnen, vor dem Vermahlen, vorzugsweise im heissen Zustand, insbesondere unmittelbar nach einer Wärmebehandlung oberhalb 100 °C, z. B. zwischen 100° und 150 °C, während einer Dauer von höchstens 10 Minuten, einer Prallbehandlung unterzogen werden, wobei zweckmäßig die Erhitzung der, gegebenenfalls noch ungeschälten, Sojabohnen in einem Wirbelbett erfolgt. Die Kombination dieses bekannten Schälverfahrens mit dem vorliegenden Mahlverfahren ist deshalb so günstig, weil bei Soja durch das Prallen bereits eine Zerteilung der Sojabohnenkerne in Kernhälften und gegebenenfalls auch schon in größere Bruchstücke vorgenommen wird. Darüberhinaus ist die in diesem Zusammenhang bevorzugte Wärmebehandlung auch der Entbitterung förderlich. Das Befeuchten des Produktes erfolgt entweder vor der Wirbelschicht oder nach dem Prallen. Im ersten Fall kann die Aufeinanderfolge der Verfahrensschritte so rasch vorgenommen werden, daß anschließend an das Prallen im warmen Zustand die noch heissen Früchte bzw. Sojabohnenstücke vermahlen bzw. warmvermahlen werden, wodurch sich eine weitere Reduktion des erforderlichen Energieaufwandes ergibt.

Wenn nun das durch die Vermahlung enthaltene Pulver anschließend in einer genießbaren Flüssigkeit, insbesondere in Wasser, zu einer Milch dispergiert wird, so wird beispielsweise eine Sojamilch erhalten, die im Vergleich zu üblichen Produkten wesentlich nährstoffreicher ist bzw. kann eine höhere Ausbeute an einer solchen Milch erhalten werden. Der Grund ist einfach darin zu sehen, daß gegenüber den herkömmlichen Naßvermahlungsverfahren das Abfiltern und Abpressen unterbleiben kann und daher auch der Nährstoffverlust vermieden wird, der mit herkömmlichen Herstellverfahren für Sojamilch verbunden ist. Es hat sich gezeigt, daß man aus einer derartigen Milch ein ausgezeichnetes Tofu-Produkt erhalten kann, sofern man die Milch nach dem Dispergieren koagulieren läßt. Dabei wird der Dispergiervorgang erleichtert und vereinfacht, wenn das zu dispergierende Pulver vorher auf eine Korngröße vermahlen wird, bei der es im wesentlichen sedimentfrei dispergierbar ist, so daß Maßnahmen zur Abtrennung eines Sedimentes unterbleiben können. Die für die vollständige Dispergierung notwendige Korngröße liegt beim vorliegenden Verfahren in einem verhältnismäßig großen Bereich, was im wesentlichen an den Eigenheiten des Verfahrens einerseits und an den herkömmlichen Bestimmungsmethoden für die Korngrößen anderseits liegt. Durch die beim Vermahlen angewandte Reibung kommt es nämlich zur Bildung mit Mikroplättchen, die in einer Richtung eine sehr geringe Dimension, in anderer Richtung jedoch einer verhältnismäßig große Erstreckung aufweisen können. Derartige Plättchen sind aber ohne weiteres dispergierbar, werden jedoch bei der Korngrößenbestimmung mit Hilfe von Sieben zuweilen schon von einem Sieb mit einer Maschenweite von 100 µm zurückgehalten. Allgemein ist die Korngröße des vermahlenen Produktes vorzugsweise so gehalten, daß der größte Anteil im Korngrößesepktrum unter 200 µm, insbesondere unter 100 µm, z. B. zwischen 25 und 50 µm liegt. Statt Wasser kommen natürlich auch andere genießbare Flüssigkeiten, wie Molke in Frage. Das Koagulieren wird üblicherweise mit Kalziumsulfat unter Erhitzung vorgenommen.

Zusammenfassend sind folgende Vorteile des beschriebenen Verfahrens zu nennen:
— geringer Energieaufwand;

– hohe Ausbeute bzw. gute Ausnützung der Früchte, wie Sojabohnen;

– gegenüber dem Naßverfahren entfallen besondere Hygienemaßnahmen sowie die Notwendigkeit der Verwendung korrosionsbeständigen Materials sowie der Arbeit in der Nässe und in wasserresistenten Räumen;

– Verbilligung der Produkte;

– Erhöhung der Produktqualität.

Das Verfahren läuft beispielsweise so ab, daß unbehandelte Sojabohnen, nach einer ersten Reinigungsbehandlung, in der in der CH-PS-575 723 geschilderten Weise – gegebenenfalls nach vorherigem Einstellen ihres Feuchtigkeitsgehaltes – im Wirbelbett erhitzt und anschließend durch Prallen geschält werden. Die Wärmebehandlung wirkt bereits etwas entbitternd, wogegen das Prallen gewünschtenfalls derart ausgeführt wird, daß sich nicht nur die Schalen von den Kernen lösen und letztere sich in Hälften zerlegen, sondern daß sich sogar größere Bruchstücke bilden.

Dann gelangen die Kernteile in ein Flockierwalzwerk. Durch die Erhitzung ist das in den Bohnen enthaltene Fett wenigstens teilweise flüssig, und dank der zugesetzten Feuchtigkeit, vorzugsweise zu einem Feuchtigkeitsgehalt zwischen 25 und 50 Gew.%, insbesondere etwa 30 Gew.%, ist die zu vermahlende Masse erweicht, so daß das Vermahlen in dieser ersten Stufe erleichtert und der Energieverbrauch reduziert wird. Die Walzen des Flockierwalzwerkes werden auf eine Temperatur geheizt, die zweckmäßig oberhalb 100°C, z. B. zwischen 110° und 200°C, betragen kann. Eine Temperatur von 150°C, gegebenenfalls etwa höher (z. B. 160° bis 170°), hat sich für die Entbitterung und Gelatinisierung als günstig erwiesen, doch kann das zu behandelnde Gut unter Umständen (besonders bei unmittelbar anschließendem Vermahlen innerhalb von maximal 5 Minuten) aus der Wärmebehandlung im Wirbelbett noch so viel Wärmeenergie besitzen, daß auf eine Beheizung der Walzen verzichtet werden kann. Dies gilt auch für die nachfolgende Vermahlungsstufe, bei der wenigstens eine Walze gewünschtenfalls beheizt sein kann.

Anschließend erfolgt die Feinvermahlung in einem Reibwalzwerk. Dies kann ein Dreiwalzwerk mit drei Walzen unterschiedlicher Geschwindigkeit oder ein Vier- bzw. Fünfwalzwerk sein, bei dem die Walzen eine jeweils höhere Drehzahl als die vorherige Walze haben. Im einfachsten Fall mag aber auch ein Zweiwalzwerk ausreichend sein, gegebenenfalls auch deren mindestens zwei nacheinander.

Zur Erzeugung von Sojakäse (Tofu) wird das erhaltene Sojapulver mit einer Feinheit von maximal 200 μm (Hauptfraktion), meist aber maximal 100 μm und mit einem Hauptanteil einer Körnung zwischen 25 μm und 50 μm in Wasser dispergiert, wobei die Dispersion sedimentfrei ist. Die erhaltene Milch wird in herkömmlicher Weise gekocht und mit $CaSO_4$ ausgefällt, sodann gesiebt und gepresst. Es ergibt sich einerseits eine Molke, anderseits der gewünschte Tofu-Käse, der aufgrund der vereinfachten Bearbeitung sehr nährstoffreich und in hoher Ausbeute (bezogen auf das Ausgangsprodukt) anfällt. Erreicht wurden in Versuchen Ausbeutequoten von 75% bis 80% Trockensubstanz bzw. 85% bis 90% des Proteins.

Es versteht sich, daß durch das vorliegende Verfahren auch andere Sojaprodukte herstellbar sind, etwa sterilisierte Sojamilch, Sojayoghurt, Sojadesserts (wie aromatisierter Sojapudding), verschiedene Sojakäse (ähnlich dem Camembert, dem Gorgonzola, dem Münster usw.), Rahmersatz, Soja-Eiscreme usw. Ferner wurde bereits erwähnt, daß andere Früchte mit ähnlicher Zellstruktur, vor allem Ölsaaten, auf gleiche Weise behandelt werden können.

Beiliegende Tabelle zeigt die Ergebnisse verschiedener Versuche zur Herstellung von Sojakäse aufgrund eines durch das oben beschriebene Verfahren gewonnenen Pulvers bzw. Mehls.

Hierzu seien folgende Erläuterungen gegeben.

01: Der Referenzkäse wurde mit Sojamilch hergestellt (herkömmliche Methode): 500 g Kotyledonen gaben, nach Einweichen in 5 Litern Wasser, kochen und pressen, 2,25 Liter Sojamilch (10,4% TS). Bei der Großfabrikation liegt die Ausbeute über 50%.

02: Enzymatisches Vollfett-Sojaschrot (1 mm Sieb). Das Mehl wurde auf 11% Feuchtigkeit eingestellt und auf einem Fünfwalzwerk (2 Passagen) verfeinert. Das fertige Produkt wurde in kaltem Wasser eingerührt.

03: Gleiches Mehl wie 02. Es wurde nur auf einer Passage verfeinert. Das Produkt wurde in siedendes Wasser eingerührt.

04: Vollfett-Sojaschrot (3 mm Sieb) wurde wie 02 behandelt und in siedendes Wasser eingerührt.

05 In Vorversuchen war es nicht möglich, Tofu und aus enzyminaktivem Mehl, das nicht auf

06: Walzwerken verfeinert wurde, herzustellen. Diese beiden Versuche beweisen, daß, nach Verfeinerung, das Mehl wieder zur Reaktion fähig ist. Beim Käse -06- war der Bittergeschmack vollkommen verschwunden. Die Farbe, die beim Toasten entsteht, prägte dem Käse jedoch eine bräunliche Tönung.

| Grundstoff | Soja-Milch | Soja-Mehl enzymaktiv (89,9% TS) | | | S.-Mehl inaktiv (91,5% TS) | |
| Beispiel | 01 | 02 | 03 | 04 | 05 | 06 |
| Behandlung | | 1 mm–5 WW | 1 mm–3 WW | 3 mm–5 WW | 1 mm–5 WW 28,9% NSI Urease 0,86 | 1 mm–5 WW 12,1% NSI Urease 0,09 |
| Menge/Wasser | 500 ml Milch (52 g TS) | 50 g/500 ml | 70 g/1000 ml | 70 g/1000 ml | 70 g/1000 ml | 70 g/1000 ml |
| °T Einrühren | – | 15°C | 90°C | 90°C | 90°C | 90°C |
| Kochzeit | – | 5 min | 10 min | 10 min | 10 min | 10 min |
| Gerinnung | 0,3% Ca SO$_4$/65° | 0,3% Ca SO$_4$/65° | 0,3% Ca SO$_4$/65° | 0,3% Ca SO$_4$/65° | 0,3% Ca SO$_4$/65° | 0,3% Ca SO$_4$/65° |
| Gerinnungszeit | 60'/65° | 60'/65° | 60'/65° | 60'/65° | 60'/65° | 60'/65° |
| Synerese | 3 Std/65° | 3 Std/65° | 3 Std/65° | 3 Std/65° | 2 Std/65° | 2 Std/65° |
| Preßzeit (Zimmertemperatur) | 3 Std/ | 3 Std/ | 15 Std/ | 15 Std/ | 16 Std/ | 16 Std/ |
| Menge Serum/TS | 265 ml/10,6 g | 280 ml/6,5 g | 610 ml/12,44 g | 680 ml/11,6 g | 580 ml/10,78 g | 610 ml/11,59 g |
| Gewicht Käse/TS | 192 g/43,9 g | 171 g/35,0 g | 340 g/66,5 g | 340 g/61,5 g | 252 g/47,0 g | 272 g/52,7 g |
| Ausbeute-TS | 39,8%* | 84,4% | 84,2% | 84,2% | 81,6% | 81,9% |
| Geschmack | gut | bitter | leicht bitter | leicht bitter | leicht bitter | gut |
| Farbe | weiß-gelblich | weiß-gelblich | weiß-gelblich | weiß-gelblich | weiß-gelblich | leicht bräunlich |
| Textur | gelartig | leicht mehlig | leicht mehlig | leicht mehlig | gelartig | gelartig |

* Ausbeute Milch (49,3%) × Ausbeute Käse (80,8%)

EP 0 165 451 B1

## Patentansprüche

1. Verfahren zum Herstellen eines proteinreichen Ölsaatenproduktes aus Soja oder Flügelbohnen, bei dem die Früchte zu Pulver vermahlen werden, dadurch gekennzeichnet, daß das Vermahlen unter Weglassung einer Dispersionsflüssigkeit im wesentlichen trocken und unter Anwendung von Druck und Reibung in einem Reibwalzwerk oder einer trocken gefahrenen Rührwerksmühle bis zur Aufschließung der Cotyledonenzellwand soweit vorgenommen wird, daß das Proteinpulver praktisch von selbst erhalten wird.

2. Verfahren nach Anspruch 1, dadurch gekennzeichnet, daß das Vermahlen auf einem Reibwalzwerk mit mindestens zwei, vorzugsweise mindestens drei, Walzen unterschiedlicher Geschwindigkeit vorgenommen wird.

3. Verfahren nach Anspruch 1 oder 2, dadurch gekennzeichnet, daß die Früchte, wie Sojabohnen, in wenigstens zwei Stufen vermahlen werden, wobei sie erst einer Quetschung, insbesondere auf einem Flockierwalzwerk, unterzogen werden, worauf die eigentliche Vermahlung des so erhaltenen flockenartigen Produktes unter Anwendung von Druck und Reibung vorgenommen wird.

4. Verfahren nach Anspruch 1, 2 oder 3, dadurch gekennzeichnet, daß gleichzeitig mit der Druckaufbringung das Produkt erhitzt wird.

5. Verfahren nach Anspruch 4, dadurch gekennzeichnet, daß die Vermahlung mit Hilfe von Walzen vorgenommen wird, von denen wenigstens ein Teil, insbesondere die Walzen des Flockierwalzwerkes, beheizt ist.

6. Verfahren nach Anspruch 5, dadurch gekennzeichnet, daß die Walzen auf eine Temperatur von 100°C, vorzugsweise auf eine Temperatur zwischen 110° und 200°C, insbesondere auf etwa 150°C, aufgeheizt werden.

7. Verfahren nach Anspruch 4, 5 oder 6, dadurch gekennzeichnet, daß vor dem Erhitzen das Früchteprodukt, wie Soja, befeuchtet wird, und daß es vorzugsweise auf eine Feuchtigkeit zwischen 25 Gew.% und 50 Gew.%, insbesondere auf etwa 30 Gew.%, gebracht wird.

8. Verfahren nach einem der Ansprüche 1 bis 7, dadurch gekennzeichnet, daß die Früchte, insbesondere Sojabohnen, vor dem Vermahlen, vorzugsweise in heissem Zustand, insbesondere unmittelbar nach einer Wärmebehandlung oberhalb 100°C, z. B. zwischen 100° und 150°C, während einer Dauer von höchstens 10 Minuten, einer Prallbehandlung unterzogen werden, und daß zweckmäßig die Erhitzung der, gegebenenfalls noch ungeschälten, Früchte in einem Wirbelbett erfolgt.

9. Verfahren zur Weiterverarbeitung der Verfahrensprodukte nach einem der Ansprüche 1 bis 8, dadurch gekennzeichnet, daß das durch die Vermahlung von Soja erhaltene Pulver anschließend in einer genießbaren Flüssigkeit, insbesondere in Wasser, zu einer Milch dispergiert, die man gegebenenfalls zur Erzielung eines Tofu-Produktes danach koagulieren läßt.

## Claims

1. A method of manufacturing a protein-rich oil seed product from soya- or wing-beans in which the fruit is milled to powder, characterised in that the milling takes place substantially in a dry state while omitting a dispersion liquid and while using pressure and friction in a friction rolling mill, or in a stirrer mill which is run in the dry state, until the cotyledon cell wall is broken down, with the milling being effected until the protein powder is practically obtained automatically.

2. Method in accordance with claim 1, characterised in that the milling is effected in a friction rolling mill with at least two and preferably three rollers of different speed.

3. Method in accordance with claim 1 or claim 2, characterised in that the fruits such as soya-beans are milled in at least two stages, with them first being subjected to crushing, in particular in a flaking mill, whereupon the actual milling of the so obtained flake-like product is effected using pressure or friction.

4. Method in accordance with claim 1, 2 or 3, characterised in that the product is heated simultaneously with the application of pressure.

5. Method in accordance with claim 4, characterised in that the milling is effected with the aid of rollers of which at least a part is heated, in particular the rollers of the flaking mill.

6. Method in accordance with claim 5, characterised in that the rollers are heated to a temperature of 100°C, preferably to a temperature between 110° and 200°C, in particular to about 150°C.

7. Method in accordance with claim 4, 5 or 6, characterised in that the fruit product such as soya is moistened prior to heating and that it is preferably brought to a moisture content between 25% by weight and 50% by weight, in particular to about 30% by weight.

8. Method in accordance with one of the claims 1 to 7, characterised in that the fruits, in particular soya beans, are subjected to an impact treatment for a duration of at most 10 minutes prior to milling, preferably in the hot state, in particular directly after a heat treatment above 100°C, for example between 100° and 150°C; and in that the heating of the optionally still unshelled fruit takes place in a fluidised bed.

9. Method of further processing the method product of one of the claims 1 to 8, characterised in that the powder obtained by the milling of soya is subsequently dispersed in a drinkable liquid, in particular in water, to form a milk which one then optionally allows to coagulate to obtain a tofu product.

## Revendications

1. Procédé de fabrication d'un produit de soja ou de graines ailées riche en protéines, dans lequel les fruits sont moulus en poudre et caractérisé en ce que la mouture est opérée essentiellement à sec, sans utilisation d'un liquide de dispersion et moyennant l'application d'une pression et d'une friction dans un moulin à cylindres à friction, ou à l'aide d'un moulin-agitateur fonctionnant à sec, jusqu'à la désagrégation de la paroi cellulaire des cotylédons au point que la poudre de protéines est obtenue quasi-spontanément.

2. Procédé selon la revendication 1, caractérisé en ce que la mouture est opérée dans un moulin à cylindres à friction comportant au moins deux (de préférence au moins trois) cylindres à vitesse de rotation différente.

3. Procédé selon la revendication 1 ou 2, caractérisé en ce que les fruits, tels les graines de soja, sont moulus en deux étapes au moins, consistant premièrement en un écrasement, en particulier dans un moulin à cylindres à floconner, suivi dans un deuxième temps de la mouture proprement dite du produit floconneux ainsi obtenu, moyennant l'application d'une pression et d'une friction.

4. Procédé selon la revendication 1, 2 ou 3, caractérisé en ce que le produit est chauffé concurremment à l'application de la pression.

5. Procédé selon la revendication 4, caractérisé en ce que la mouture est opérée au moyen de cylindres dont au moins une partie, en particulier les cylindres du moulin à floconner, est chauffée.

6. Procédé selon la revendication 5, caractérisé en ce que les cylindres sont chauffés à une température de 100 °C, de préférence entre 110 et 200 °C et en particulier, à environ 150 °C.

7. Procédé selon la revendication 4, 5 ou 6, caractérisé en ce que les fruits, tels le soja, sont humidifiés préalablement au chaffage et que leur taux d'humidité est poré de préférence entre 25 et 50% en poids, en particulier à environ 30% en poids.

8. Procédé selon l'une des revendications 1 à 7, caractérisé en ce que les fruits, en particulier les graines de soja, sont soumis avant la mouture à un traitement par percussion pendant au moins 10 minutes, de préférence à chaud, en particulier immédiatement après un traitement thermique au delà de 100 °C, par ex. entre 100 et 150 °C et que de préférence, le chauffage des fruits éventuellement non encore décortiqués est opéré dans un lit fluidisé.

9. Procédé de traitement ultérieur des produits obtenus par le procédé selon l'une des revendications 1 à 8, caractérisé en ce que la poudre obtenue par la mouture du soja est ensuite dispersée en lait dans un liquide buvable, en particulier dans de l'eau, lait que l'on laisse ensuite éventuellement se coaguler pour obtenir un produit dit Tofu.